# EUROPEAN PATENT APPLICATION

(11) **EP 4 434 862 A1**
(43) Date of publication of application: **25.09.2024**
(21) Application number: 24163783.4
(22) Date of filing: 15.03.2024
(51) Int. Cl.: B62J 9/00, B62K 5/02, B62K 7/02

(54) **CARGO VEHICLE**

(30) Priority: 21.03.2023 TW 112110512
(71) Applicant: Rexon Industrial Corp. Ltd., Taichung 41279 (TW)
(72) Inventor: Chang, Yao-Jen, 41279 Tali, Taichung (TW); Chen, Jian-Dong, 41279 Tali, Taichung (TW)
(74) Representative: BSB Patentanwälte Schütte & Engelen Partnerschaft mbB

(57) **Abstract**

A cargo vehicle includes a vehicle unit (1), a cargo case (2), a slide rail unit (3), and a connecting unit (4). The vehicle unit (1) includes a vehicle frame (11) including a frontal frame body (111), and two rear frame bodies (112) cooperatively define an accommodation space (113) with the frontal frame body (111). The cargo case (2) is removably disposed in the accommodation space (113). The slide rail unit (3) includes two first rail sets (31) mounted on the cargo case (2), and two second rail sets (32) mounted on the rear frame bodes (112). The first rail sets (31) are removably coupled to the second rail sets (32) so that the cargo case (2) is moveable relative to the vehicle frame (11). The connecting unit (4) includes a first connecting set (5), and a second connecting set (6) removably coupled to the first connecting set (5).

## Description

The disclosure relates to a cargo vehicle, and more particularly to a cargo vehicle including a removable cargo case.

A conventional electric cargo vehicle includes a tricycle and a cargo hold unit. The tricycle is electrically powered and includes a front body, a rear body that is connected to the front body, a front wheel that is connected to the front body, and two rear wheels that are both connected to the rear body. The cargo hold unit defines a cargo accommodation space, and has a swivel door adjacent to the cargo accommodation space for a user to access the cargo accommodation space. In order for the user of the conventional electric cargo vehicle to access the cargo accommodation space, the user will need to open the swivel door to load or offload cargo and then close the swivel door. Although the conventional electric cargo vehicle may be able to transport a significant quantity of cargo, when the amount of cargo requiring transport is large or if the weight is heavy, significant labour is required to load or offload the cargo, thereby increasing the labour cost and transport time.

Therefore, an object of the disclosure is to provide a cargo vehicle that can alleviate at least one of the drawbacks of the prior art.

According to the disclosure, there is provided a cargo vehicle according to claim 1.

Other features and advantages of the disclosure will become apparent in the following detailed description of the embodiment(s) with reference to the accompanying drawings. It is noted that various features may not be drawn to scale.
Figure 1 is a perspective view illustrating a first embodiment of a cargo vehicle according to the present disclosure, where a cargo case of the cargo vehicle is in a loaded position relative to a vehicle frame of the cargo vehicle.
Figure 2 is fragmentary exploded perspective view illustrating the embodiment, where the cargo case is in an unloaded position relative to the vehicle frame.
Figure 3 is a perspective view illustrating the cargo case and a slide rail unit mounted to the cargo case.
Figure 4 is a fragmentary enlarged perspective view illustrating the vehicle frame when the cargo case is in the unloaded position relative to the vehicle frame.
Figure 5 is a fragmentary top view of the embodiment.
Figure 6 is a fragmentary cross-sectional view of the embodiment taken along line VI-VI in Figure 5.
Figure 7 is a fragmentary cross-sectional view of the embodiment taken along line VII-VII in Figure 6.
Figure 8 is a fragmentary perspective view illustrating a transverse rod at an unlifted position, where the transverse rod is at a bottom end of a slide slot.
Figure 9 is a fragmentary side view illustrating the cargo case in the loaded position relative to the vehicle frame, and the transverse rod in the unlifted position relative to the bottom end of the slide slot.
Figure 10 is a similar view to Figure 8, however, in Figure 10 the transverse rod is in a lifted position, where the transverse rod is distal to the bottom end of the slide slot.
Figure 11 is a similar view to Figure 9, however, in Figure 11 the transverse rod is in the lifted position, where the transverse rod is distal to the bottom end of the slide slot.
Figure 12 is a fragmentary side view illustrating a front opening of a first rail set coupling to a second rail set of a slide rail unit.
Figure 13 is a fragmentary side view illustrating the transverse rod abutting against a guide surface of a retaining hook. The figure does not show the transverse rod is in abutment with the main body and hook portion (see the guide surface in dotted line)

Before the disclosure is described in greater detail, it should be noted that where considered appropriate, reference numerals or terminal portions of reference numerals have been repeated among the figures to indicate corresponding or analogous elements, which may optionally have similar characteristics.

It should be noted herein that for clarity of description, spatially relative terms such as "top," "bottom," "upper," "lower," "on," "above," "over," "downwardly," "upwardly" and the like may be used throughout the disclosure while making reference to the features as illustrated in the drawings. The features may be oriented differently (e.g., rotated 90 degrees or at other orientations) and the spatially relative terms used herein may be interpreted accordingly.

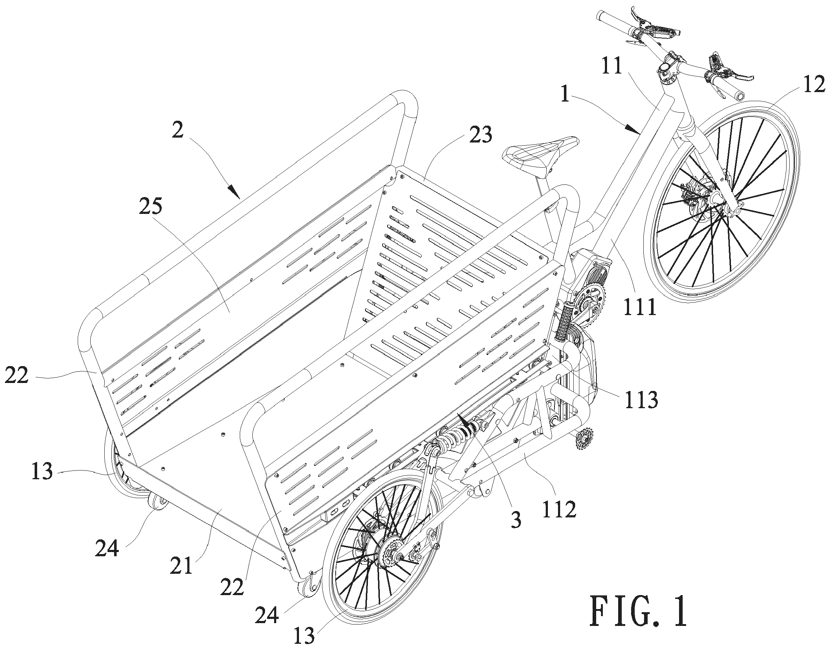

Referring to Figures 1 to 3, a first embodiment of a cargo vehicle according to the present disclosure includes a vehicle unit 1, a cargo case 2, a slide rail unit 3, and a connecting unit 4. The vehicle unit 1 includes a vehicle frame 11, a front wheel 12, and two rear wheels 13. The vehicle frame 11 includes a frontal frame body 111, two rear frame bodies 112, and an accommodation space 113. The two rear frame bodies 112 extend rearwardly and respectively from the frontal frame body 111, they are spaced apart from each other in a left-right direction (D1), and they define an accommodation space 113 cooperatively with the frontal frame body 111. The front wheel 12 is mounted to the frontal frame body 111. The two rear wheels 13 are respectively mounted to the rear frame bodies 112. In this embodiment, the vehicle unit 1 is an electrical power-assisted tricycle; however, this is not a limitation of the disclosure, and in other embodiments, the vehicle unit 1 may be powered with a different energy source.

The cargo case 2 is removably disposed in the accommodation space 113, and includes a bottom panel 21, two side panels 22, a front panel 23, and four cargo wheels 24. The bottom panel 21 has two opposite sides. The two side panels 22 are respectively connected to the two opposite sides of the bottom panel 21, they respectively face the two rear frame bodies 112, and they each extend along a front-rear direction (D2). The front panel 23 faces the frontal frame body 111 of the vehicle frame 11, and interconnects between the two side panels 22. The cargo wheels 24 are mounted to the bottom panel 21. The front panel 23 and the two side panels 22 cooperatively define a cargo space 25. The cargo space 25 is open at a side that is opposite to the front panel 23.

The slide rail unit 3 includes two first rail sets 31, and two second rail sets 32.

The two first rail sets 31 are respectively mounted on the side panels 22 of the cargo case 2. Each of the first rail sets 31 extend from a side of the respective side panel 22 that is proximate to the front panel 23. In this embodiment, each of the two first rail sets 31 has a front rail end 311, a rear rail end 312, an upper rail bar 313, a lower rail bar 314, a slide channel 317, and a blocking piece 319. The front rail end 311 is proximate to the front panel 23. The rear rail end 312 is distal to the front panel 23. The upper rail bar 313 interconnects the front and rear rail ends 311, 312, and ends at the front rail end 311 and the rear rail end 312. The lower rail bar 314 ends at both of the front rail end 311 and the rear rail end 312, and is located below the upper rail bar 313.

In each of the first rail sets 31, the front rail end 311 has a front upper rail bar portion 315 that is a part of the upper rail bar 313, and a front lower rail bar portion 316 that is a part of the lower rail bar 314. The slide channel 317 is cooperatively confined by the upper rail bar 313, the lower rail bar 314 between the front rail end 311, and the rear rail end 312, and has a front opening 318 that is adjacent to the front panel 23. More specifically, in each of the first rail sets 31, the front lower rail bar portion 316 of the front rail end 311 cooperates with the front upper rail bar portion 315 of the front rail end 311 to define the front opening 318 which is gradually broadened toward the front panel 23. In each of the first rail sets, the front opening 318 is broader than the remaining part of the slide channel 317. The blocking piece 319 of each of the two first rail sets 31 is disposed in the slide channel 317 near the rear rail end 312.

In this embodiment, the bottom panel 21 extends horizontally. A distance between the front rail end 311 of each of the first rail sets 31 and the bottom panel 21 is greater than a distance of the rear rail end 312 of each of the first rail sets 31 to the bottom panel 21. Each of the two first rail sets 31 extends inclinedly and upwardly from the rear rail end 312 to the front rail end 311. In other words, the slide channel 317 of each of the first rail sets 31 is at an inclined angled relative to a horizontal plane that is parallel to the bottom panel 21, and is higher near the front rail end 311. In variations of the first embodiment, the first rail sets 31 may be implemented via various different structures, as long as the slide channel 317 remains inclined and is kept higher near the front rail end 311.

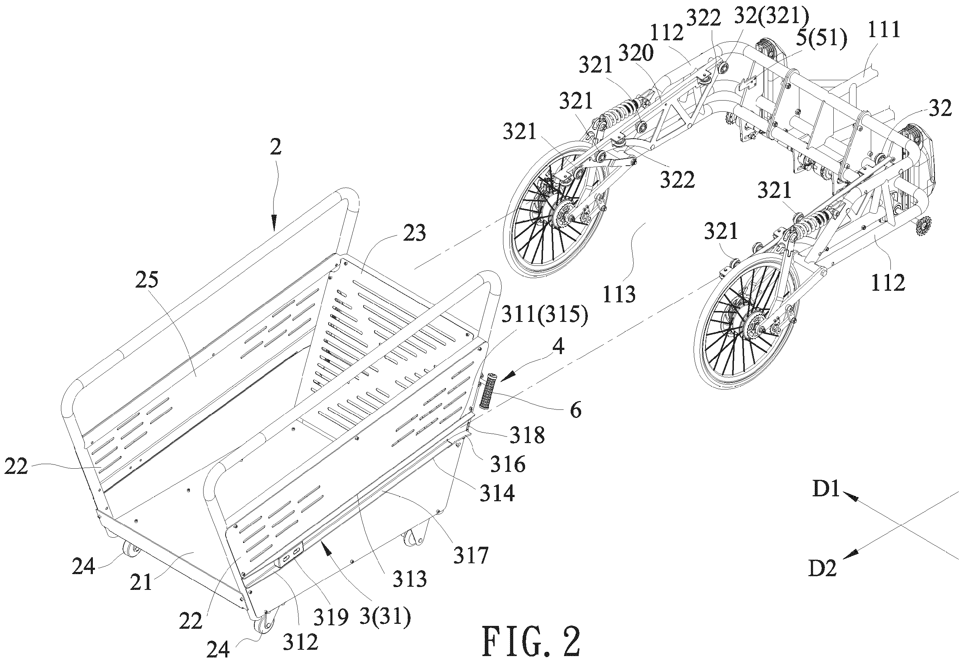

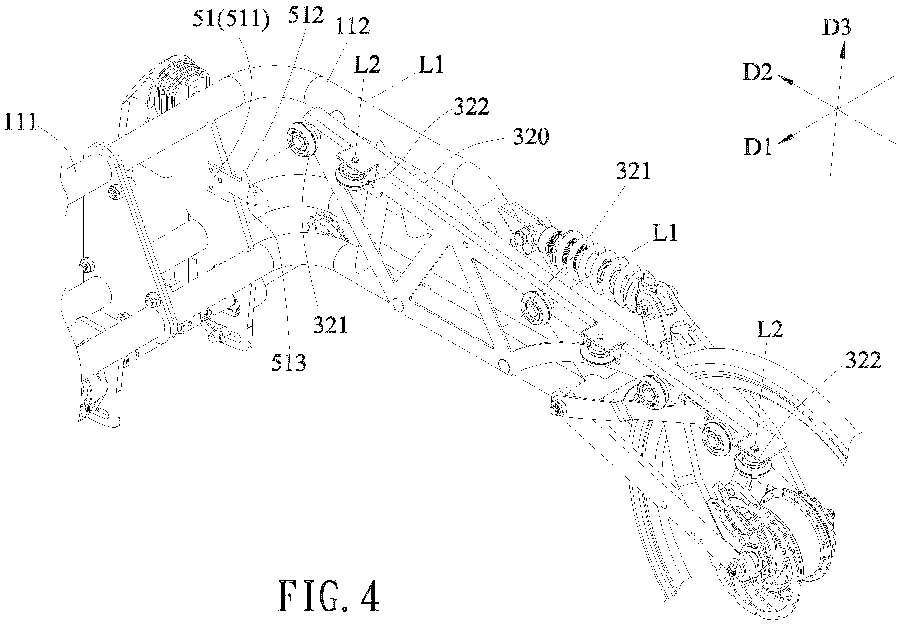

Referring to Figures 2 and 4, the two second rail sets 32 are respectively mounted on the rear frame bodies 112. The first rails sets 31 are respectively and removably coupled to the second rail sets 32 so that the cargo case 2 is moveable relative to the vehicle frame 11. Each of the second rail sets 32 has a roller mounting member 320 mounted to one of the rear frame bodies 112, a plurality of first rollers 321, and a plurality of (only one is shown) second roller 322. The first rollers 321 are spaced apart and disposed on the roller mounting member 320 in the front-rear direction (D2). The second rollers 322 of each of the second rail sets 32 are mounted to the roller mounting member 320. The first rollers 311 and the second rollers 322 of the second rail set 32 are allowed to roll into the first rail sets 31 through the front openings 318 of the slide channels 317 of the first rail sets 31.

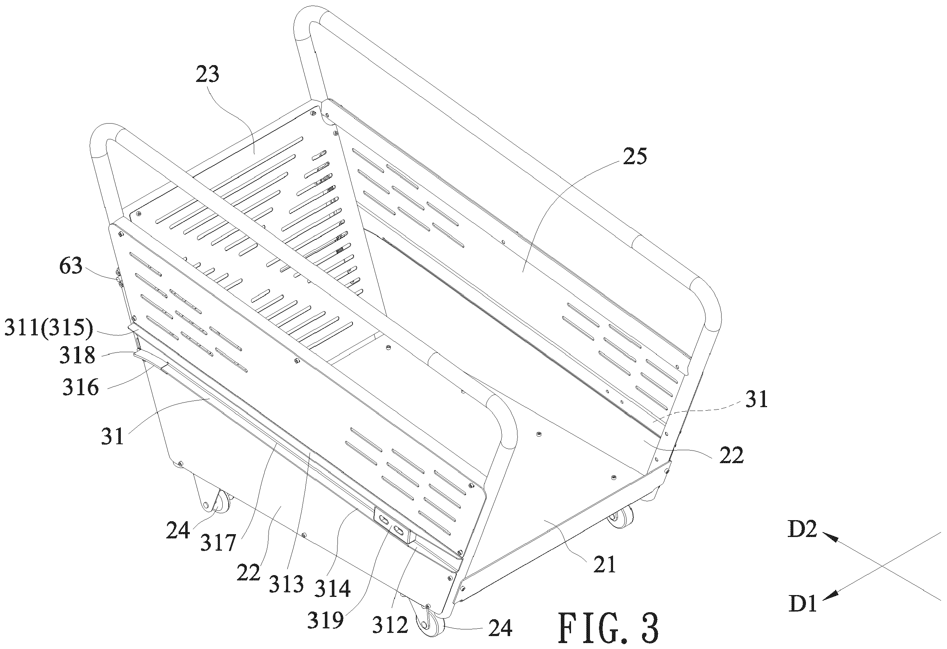

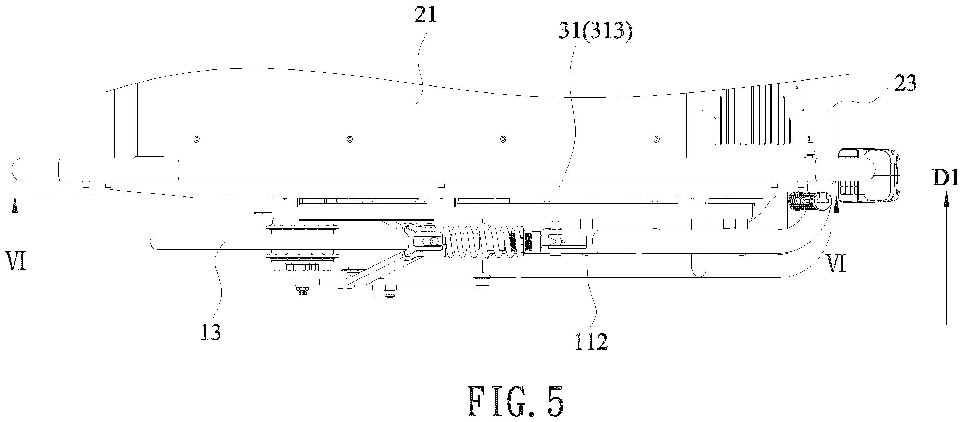

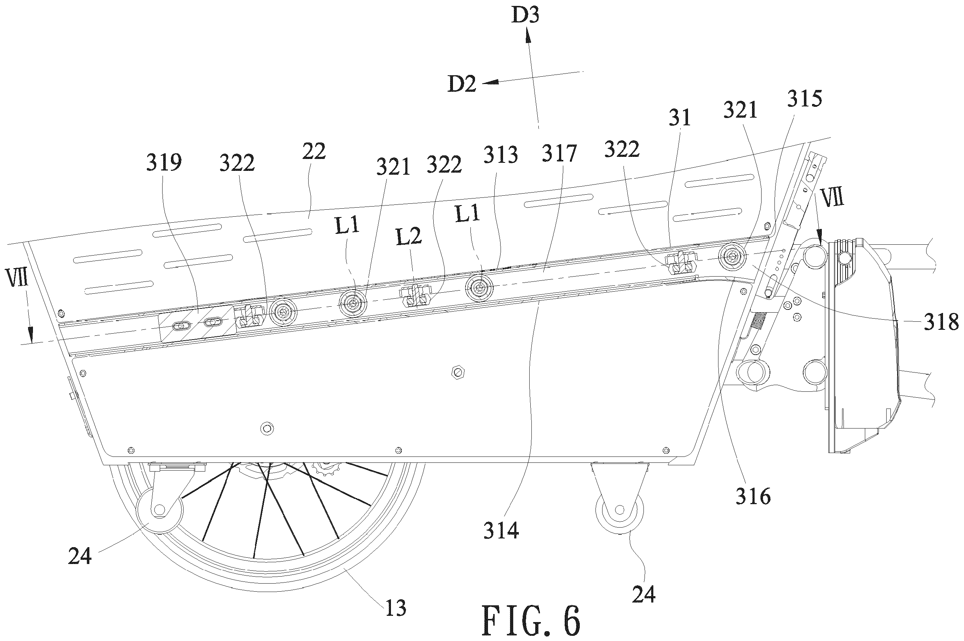

Referring to Figures 4, 5, and 6, each of the first rollers 321 are rotatable about a rotation axis (L1) which extends in the left-right direction (D1). The first rollers 321 of each second rail set 32 are extendable into the slide channel 317 of a respective one of the first rail sets 31 to abut against the upper rail bar 313 above the slide channel 317. In this way, the cargo case 2 may be moved along the second rail sets 32 with less effort. Referring to Figures 3 and 6, in each of the first rail sets 31, the front lower rail bar portion 316 of the lower rail bar 314 gradually extends downwardly to be displaced gradually away from the front upper rail bar portion 315 of the upper rail bar 313 so that the first rollers 321 are guided to roll into the slide channel 317.

Referring to Figures 4, 6 and 7, each of the second rollers 322 of the second rail sets 32 is rotatable about a rotation axis (L2) that extends in a top-bottom direction (D3). The second rollers 322 are extendable into the slide channel 317 of a respective one of the first rail sets 31 to abut against the respective side panel 22, thereby restricting movement of the cargo case 2 in the left-right direction (D1). This prevents the cargo case 2 from wobbling and causing damage to cargo transported by the cargo vehicle. In some embodiments, each of the second rail sets 32 may have one second roller 322.

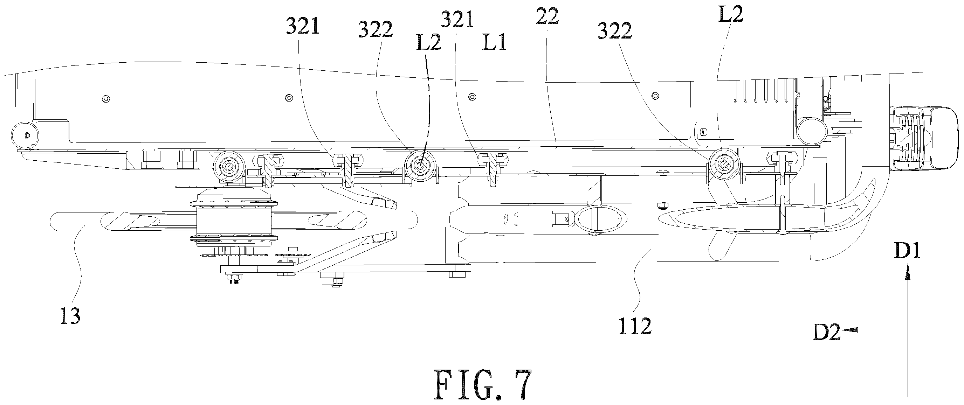

Figures 6 and 7 show the relative positions of the first rail sets 31 and the second rail sets 32.

Referring to Figures 2, 4 and 8, the connecting unit 4 includes a first connecting set 5 that is disposed on the frontal frame body 111, and a second connecting set 6 that is disposed on the front panel 23 of the cargo case 2, and that is removably coupled to the first connecting set 5. When the second connecting set 6 is uncoupled from the first connecting set 5, the cargo case 2 is moveable relative to the vehicle frame 11 and is removable from the accommodation space 113.

The first connecting set 5 has two retaining hooks 51 (only one is shown) that are disposed on the frontal frame body 111, and that are located in the accommodation space 113. The retaining hook 51 has a main body portion 511, a hook portion 512, and a guide surface 513. The main body portion 511 is connected to the frontal frame body 111. The hook portion 512 protrudes upwardly from a side of the main body portion 511 distal to the frontal frame body 111. The guide surface 513 extends inclinedly, upwardly, and forwardly toward the frontal frame body 111 from an end of the hook portion 512 distal to the frontal frame body 111. While two retaining hooks 51 are provided in this embodiment, in other embodiments, the first connecting set 5 may have only one retaining hook 51.

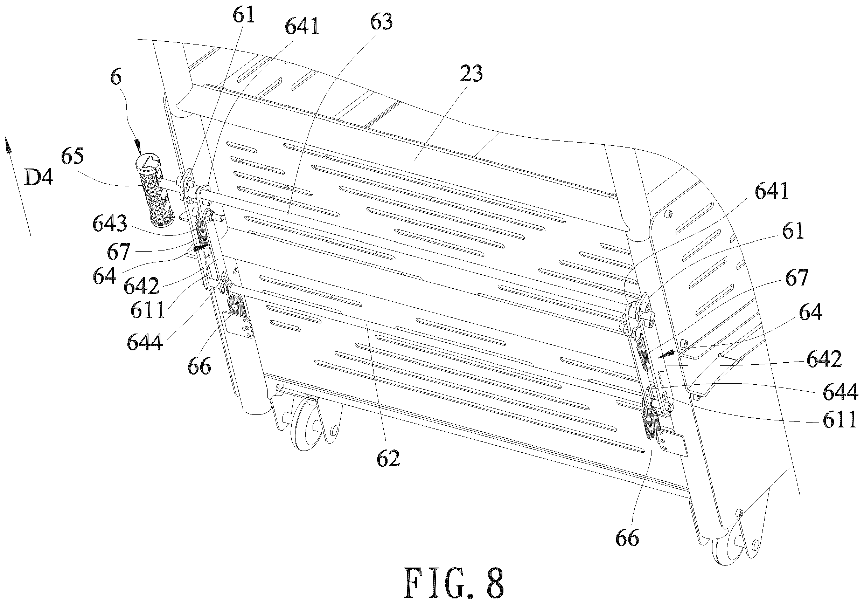

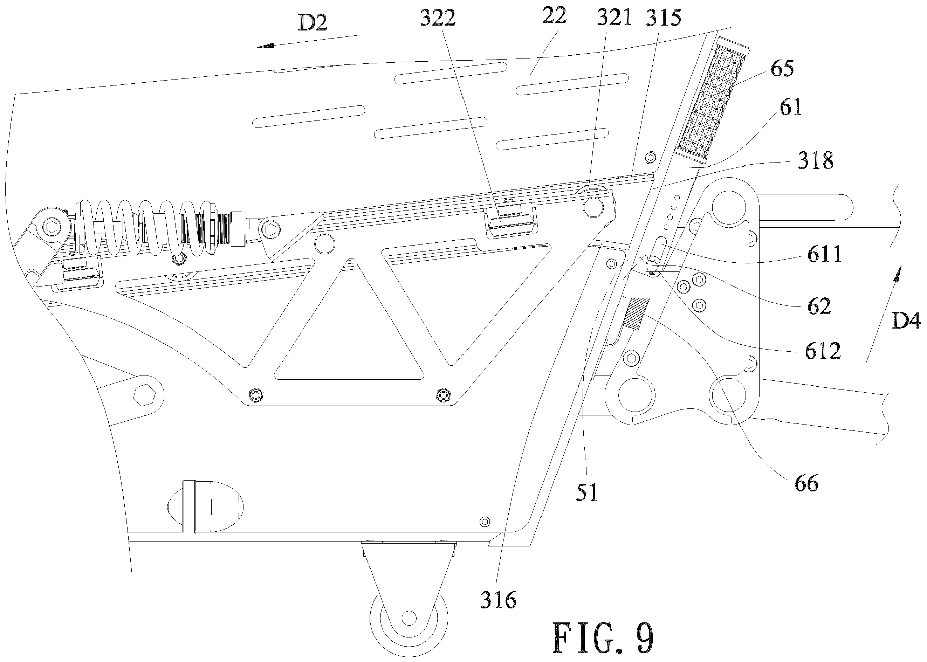

Referring to Figures 8 and 9, each second connecting set 6 has two fixed seats 61, a transverse rod 62, a transmission shaft 63, two transmission assemblies 64, a handle 65, two restoring members 66, and two auxiliary restoring members 67.

Each of the fixed seat 61 is fixed to the front panel 23, and spaced apart in the left-right direction (D1). Each of the fixed seats (61) has a slide slot 611 that extends along a slide direction (D4) transverse to the left-right direction (D1) and that is penetrated by the transverse rod 62.

The transverse rod 62 extends in the left-right direction (D1) and engages the retaining hook 51 in such a manner that it abuts against both of the main body portion 511 and the hook portion 512 of the retaining hook 51.

The transmission shaft 63 is mounted between the two fixed seats 61, is located above the transverse rod 62, and extends in the left-right direction (D1). The transmission shaft 63 is rotatable relative to the two fixed seats 61, and one end of the transmission shaft 63 penetrates through one of the fixed seats 61 and protrudes from the cargo case 2 in the left-right direction (D1). Both of the transmission assemblies 64 couple the transmission shaft 63 with the transverse rod 62. Both of the transmission assemblies 64 are located between the fixed seats 61. Each of the transmission assemblies 64 has a transmission member 641, a linkage 642, and a hinge pin 643.The transmission member 641 is rotatable, and is connected to the transmission shaft 63. The linkage 642 has two opposite ends, and has a slide hole 644 on one of the two opposite ends that is a through hole in the left-right direction (D1), and that is penetrated by an end of the transverse rod 62. The other end of the linkage 642 is connected to the transmission member 641 via the hinge pin 643. Therefore, one of the ends of the linkage 642 is pivotally connected to the transmission member 641, another one of the ends of the linkage 642 is pivotally connected to the transverse rod 62, and each of the transmission assemblies 64 are connected to the transverse rod 62 and the transmission shaft 63.

The handle 65 is rotatable, and is connected to one of the transmission assemblies 64. In this embodiment, the handle 65 is connected to the end of the transmission shaft 63 of the transmission assembly 64 that protrudes from the cargo case 2. Each of the restoring members 66 is located below the transverse rod 62, and interconnects the transverse rod 62 with the front panel 23. Each of the auxiliary restoring members 67 has two opposite ends. One end of each of the auxiliary restoring members 67 is connected to the hinge pin 643 of one of the transmission assemblies 64; another end of each of the auxiliary restoring members 67 is connected to a fixed seat 61 above the slide slot 611. In this embodiment each of the restoring members 66, and the auxiliary restoring members 67 are extension springs.

Referring to Figures 8 to 10, the handle 65 is operable to rotate the transmission shaft 63 which in turn drives the transverse rod 62 via the transmission assemblies 64 to move in the slide slot 611 between a lifted position and an unlifted position. More specifically, when the transmission shaft 63 is rotated, the transmission members 641 of the transmission assemblies 64 are driven to rotate which drives movement of the linkages 642, and the transverse rod 62 is driven by movement of the linkages 642 to move in the slide slot 611 in the slide direction (D4) between the lifted position and the unlifted position.

Furthermore, when the transverse rod 62 is in the unlifted position, the transverse rod 62 is at a bottom end 612 of the slide slot 611 of each of the fixed seats 61, and the transmission shaft 63, and the two hinge pins 643 and the two linkages 642 of the two transmission assemblies 64 lie on the same plane that extends substantially parallel the front panel 23. In other words, each hinge pin 643, the corresponding slide slot 611, and the corresponding journaling point of the transmission shaft 63 are collinear on a line that extends substantially parallel the front panel 23, and each of the hinge pins 643 is located between the corresponding slide slot 611 and the corresponding journaling point of the transmission shaft 63.

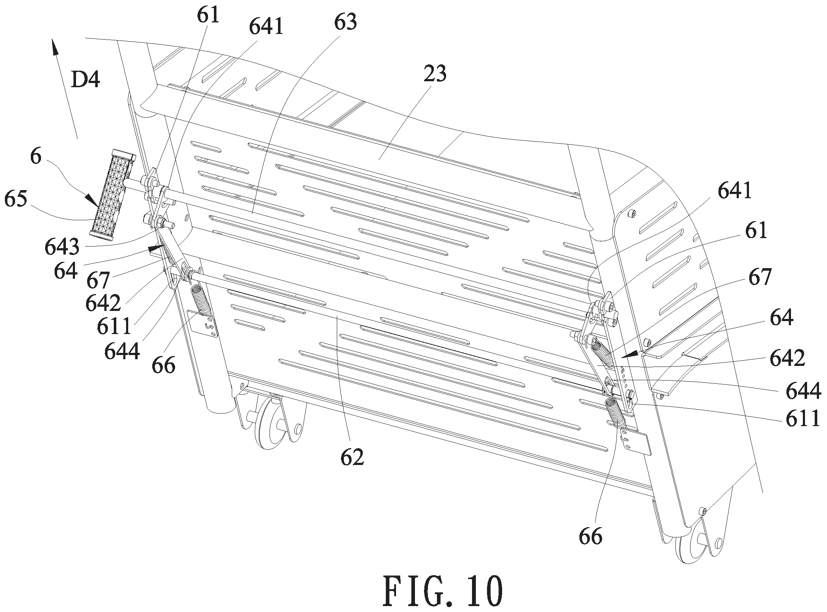

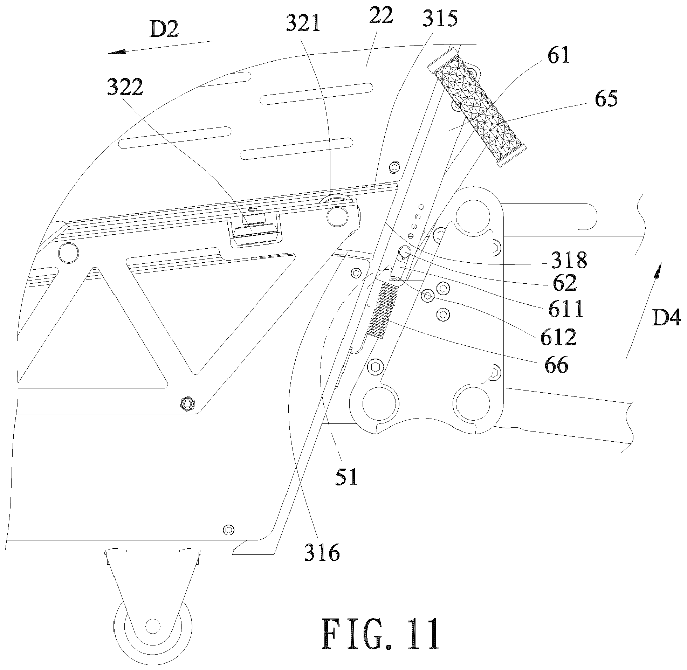

Referring to Figures 10 and 11, when the transverse rod 62 is in the lifted position, the transverse rod 62 is distal to the bottom end 612 of the slide slot 611 of each of the fixed seats 61, the restoring members 66 are pulled tensely and thus generate a returning force to return the transverse rod 62 towards the bottom ends 612 of the slide slots 611, and the auxiliary restoring members 67 are pulled tensely and thus generate a restoring force that pulls the hinge pins 643. Therefore, the transverse rod 62 is driven by movement of the linkages 642 to move in the slide slot 611 towards the bottom ends 612 of the slide slots 611. By providing the restoring members 66 and the auxiliary restoring members 67 which generate a restoring force to return the transverse rod 62 toward the bottom ends 612 of the slide slots 611, when the transverse rod 62 is in the lifted position, and when a user of the cargo vehicle releases the handle 65 (via a rotation of the handle 65), the restoring members 66 and the auxiliary members 67 will help to return the transverse rod 62 to the unlifted position.

Referring to Figures 1 and 2, the cargo case 2 is moveable relative to the vehicle frame 11 between a loaded position and an unloaded position.

Referring to Figures 1, 2 and 9, when the cargo case 2 is in the loaded position, the second connecting set 6 is coupled to the first connecting set 5, the transverse rod 62 is in the unlifted position, and is engaged with the retaining hook 51 and abuts against the main body portion 511 and the hook portion 512 of the retaining hook 51. Furthermore, when the cargo case 2 is in the loaded position, the first rail sets 31 are respectively coupled to the second rail sets 32, and the first rollers 321 of each of the second rail sets 32 are extended into the slide channel 317 of a respective one of the first rail sets 31. Additionally, the cargo case 2 is in the accommodation space 113 and distal to the ground, the front panel 23 faces the frontal frame body 111, and the cargo wheels 24 do not touch the ground to prevent the cargo wheels 24 from affecting the stability of the vehicle unit 1, when the vehicle unit 1 is moving.

Referring to Figure 2, when the cargo case 2 is in the unloaded position, the second connecting set 6 is uncoupled from the first connecting set 5, the first rail sets 31 are uncoupled to the second rails sets 32, the cargo case 2 is not in the accommodation space 113, and the cargo wheels 24 mounted to the bottom panel 21 of the cargo case 2 are in contact with the ground, thereby allowing the cargo case 2 to be moved. The user of the cargo vehicle may push the cargo case 2 to a specified position for the loading of cargo or the unloading of cargo.

It should be noted that, because the cargo space 25 is open at a side that is opposite to the front panel 23, the cargo case 2 offers easier access for the user to load light weight goods when the cargo case 2 is in the loaded position relative to the vehicle frame 11.

In a variation of the first embodiment, the vehicle unit 1 may be used with multiple cargo cases 2. When one of the cargo cases 2 is in the unloaded position relative to the vehicle unit 1, the user may load another cargo case 2 onto the vehicle unit 1, thereby speeding up the loading and offloading of goods.

Referring to Figures 10 and 11, when the user wishes to unload the cargo case 2 from the vehicle frame 11, the user rotates the handle 65 which drives the mechanical linkage structure of the transmission shaft 63, the transmission members 641, and the transverse rod 62 to move the transverse rod 62 towards the lifted position, where the transverse rod 62 is distal to the bottom end 612 of the slide slots 611 of the fixed seats 61. When the transverse rod 62 in the lifted position, the transverse rod 62 is no longer engaged to the corner of the retaining hook 51, and the cargo case 2 may slide along the second rail sets 32 under its own weight to reach the ground, this unloads the cargo case 2 efficiently and effortlessly, thereby saving both labor and time.

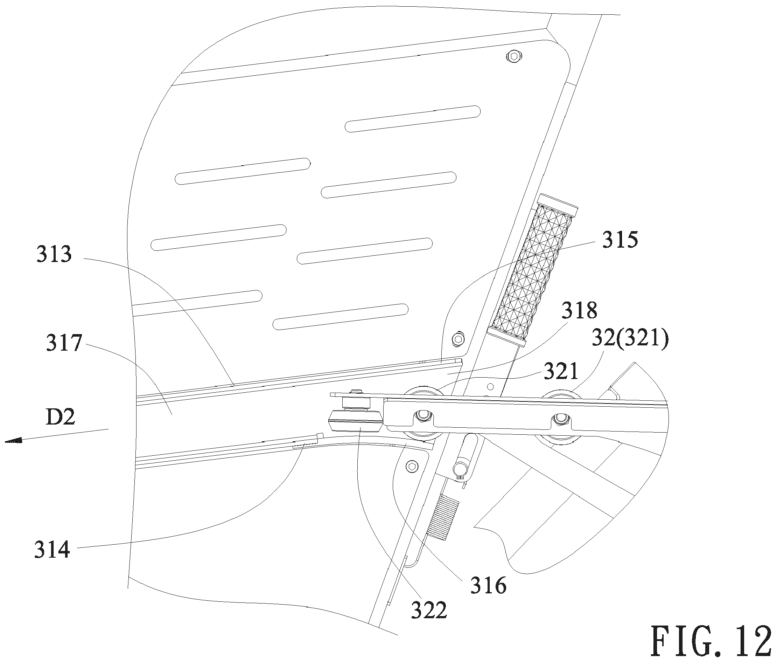

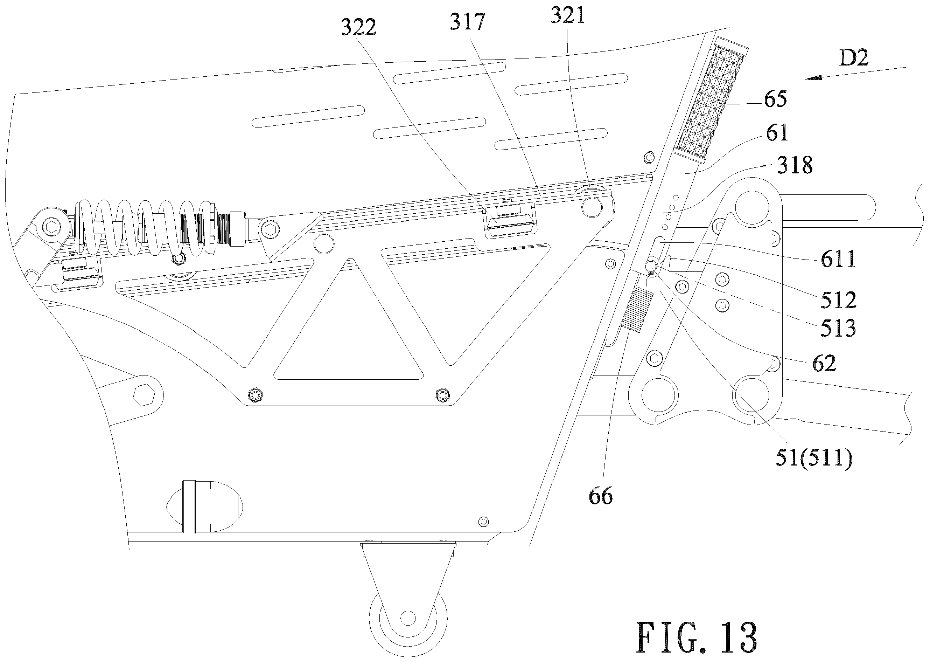

Referring to Figures 2, 12, and 13, when the user wishes to load the cargo case 2 to the vehicle frame 11, the user first pushes the cargo case 2 into the accommodation space 113, the cargo wheels 24 decreases the amount of effort the user must exert at this stage. Then, the opening 318 of each of the first rail sets 31 are aligned with an end of each of the second rails sets 32 distal to the frontal frame body 111 of the vehicle frame 11. In each of the first rail sets 31, since the front lower portion 316 of the lower rail bar 314 gradually extends downwardly to be displaced gradually away from the front upper rail bar portion 315 of the upper rail bar 313, the fist rollers 321 of a second rail set 32 may be guided to roll into the slide channel 317. Therefore, in this embodiment, the first rail sets 31 may be easily coupled respectively with the second rail sets 32, and the chances of the coupling becoming disjointed is much lower.

Next, the cargo case 2 is pushed further, the cargo case 2 will gradually slide upwards along the two second rail sets 32, eventually lifting the cargo wheels 24 off the ground. Furthermore, as the cargo case 2 is pushed further, the transverse rod 62 is slided along the guide surface 513 of the retaining hook 51 and is guided upwardly and forwardly until falling downward to contact the main body portion 511 of the retaining hook 51 as the cargo case 2 is moved into the accommodation space 113. The transverse rod 62 is now engaged with the corner of the retaining hook 51, and the cargo case 2 is loaded to the vehicle frame 11 with much less effort. In a variation of the embodiment, the first connecting set 5 may be disposed on the front panel 23 of the cargo case 2, and the second connecting set 6 may be disposed on the frontal frame body 111 of the vehicle frame 11. When the cargo case 2 is pushed towards the frontal frame body 111 the transverse rod 62 can still engage the retaining hook 51 as is the case in the first embodiment. While there are two transmission assemblies 64 and two retaining hooks 51 in this embodiment, one transmission assembly 64 and one retaining hook 51 may be used to achieve the same result of engagement between the transverse rod 62 and the retaining hook 51.

When the cargo case 2 is being pushed toward the frontal frame body 111, and the transverse rod 62 is about to engage the retaining hook 51, the blocking pieces 319 may respectively smoothly abut against the second rail sets 31. This prevents the retaining hooks 51 from damaging the front panel 23 of the cargo case 2, and increases the success rate and reliability of the transverse rod 62 engaging the retaining hook 51.

In summary of the above, in the cargo vehicle according to the present disclosure, by having the first rail sets 31 respectively removably coupled to the second rail sets 32, the cargo case 2 is moveable relative to the vehicle frame 11 of the vehicle unit 1. By virtue of the second connecting set 6 being removably coupled to the first connecting set 5, the cargo case 2 may be easily loaded or unloaded from the vehicle frame 11, thereby saving time and labour in the loading or unloading of goods into the cargo vehicle.

In the description above, for the purposes of explanation, numerous specific details have been set forth in order to provide a thorough understanding of the embodiment(s). It will be apparent, however, to one skilled in the art, that one or more other embodiments may be practiced without some of these specific details. It should also be appreciated that reference throughout this specification to "one embodiment," "an embodiment," an embodiment with an indication of an ordinal number and so forth means that a particular feature, structure, or characteristic may be included in the practice of the disclosure. It should be further appreciated that in the description, various features are sometimes grouped together in a single embodiment, figure, or description thereof for the purpose of streamlining the disclosure and aiding in the understanding of various inventive aspects; such does not mean that every one of these features needs to be practiced with the presence of all the other features. In other words, in any described embodiment, when implementation of one or more features or specific details does not affect implementation of another one or more features or specific details, said one or more features may be singled out and practiced alone without said another one or more features or specific details. It should be further noted that one or more features or specific details from one embodiment may be practiced together with one or more features or specific details from another embodiment, where appropriate, in the practice of the disclosure.

## Claims

1. A cargo vehicle comprising:
a vehicle unit (1) including
a vehicle frame (11) that includes a frontal frame body (111), and two rear frame bodies (112) that extends rearwardly and respectively from said frontal frame body (111), that are spaced apart from each other in a left-right direction (D1), and that define an accommodation space (113) cooperatively with said frontal frame body (111),
a front wheel (12) mounted to said frontal frame body (111), and
two rear wheels (13) respectively mounted to said rear frame bodies (112);
a cargo case (2) removably disposed in said accommodation space (113), and including a bottom panel (21) that has two opposite sides, two side panels (22) that are respectively connected to said two opposite sides of said bottom panel (21), that respectively face said two rear frame bodies 112, and that each extends along a front-rear direction (D2), a front panel (23) that faces said frontal frame body (111), and that interconnects between said two side panels (22), and a plurality of cargo wheels (24) that are mounted to said bottom panel (21);
**characterized in that** said cargo vehicle further comprising:
a slide rail unit (3) including two first rail sets (31) that are respectively mounted on said side panels (22) of said cargo case (2), and two second rail sets (32) that are respectively mounted on said rear frame bodies (112), said first rail sets (31) being respectively removably coupled to said second rail sets (32) so that said cargo case (2) is moveable relative to said vehicle frame (11); and
a connecting unit (4) including a first connecting set (5) that is disposed on said frontal frame body (111), and a second connecting set (6) that is disposed on said front panel (23) of said cargo case (2), and that is removably coupled to said first connecting set (5);
wherein when said second connecting set (6) is uncoupled from said first connecting set (5), said cargo case (2) is moveable relative to said vehicle frame (11) and is removable from said accommodation space (113).

2. The cargo vehicle as claimed in claim 1, wherein:
each of said two first rail sets (31) has a front rail end (311) that is proximate to said front panel (23), and a rear rail end (312) that is distal to said front panel (23),
each of said two first rail sets (31) extends inclinedly and upwardly from said rear fail end (312) to said front rail end (311).

3. The cargo vehicle as claimed in claim 2, wherein:
each of said two first rail sets (31) further has
an upper rail bar (313) that ends at said front rail end (311) and said rear rail end (312),
a lower rail bar (314) that ends at both of said front rail end (311) and said rear rail end (312), and
a slide channel (317) that is cooperatively confined by said upper rail bar (313) and said lower rail bar (314) between said front rail end (311) and said rear rail end (312), and that has a front opening (318) that is adjacent to said front panel (23);
each of said second rail set (32) has a roller mounting member (320) mounted to one of said rear frame bodies 112, and a plurality of first rollers (321) that are spaced apart on said roller mounting member (320) in the front-rear direction (D2), that are extendable into said slide channel (317) of a respective one of said first rail sets (31) to abut against said upper rail bar (313) above said slide channel (317), and that are each rotatable about a rotation axis (L1) which extends in the left-right direction (D1) ; and
said first rollers (321) of said second rail sets (32) being allowed to roll into said first rail sets (31) through said front openings (318) of said slide channels (317) of said first rail sets (31).

4. The cargo vehicle as claimed in claim 3, wherein in each of said first rail sets (31), said front rail end (311) has a front upper rail bar portion (315) that is a part of said upper rail bar (313), and a front lower rail bar portion (316) that is a part of said lower rail bar (314), and that cooperates with said front upper rail bar portion (315) to define said front opening (318), said front opening (318) being gradually broadened toward said front panel (23), said front lower rail bar portion (316) of said lower rail bar (314) gradually extending downwardly to be displaced gradually away from said front upper rail bar portion (315) of said upper rail bar (313) so that said first rollers (321) are guided to roll into said slide channel (317).

5. The cargo vehicle as claimed in claim any one of claim 3 and 4, wherein each of said second rail sets (32) further has a second roller (322) mounted to said roller mounting member 320, said second roller (322) of each of said second rail sets (32) being rotatable about a rotation axis (L2) that extends in a top-bottom direction (D3).

6. The cargo vehicle as claimed in any one of claims 1 to 5 wherein:
said first connecting set (5) has
a retaining hook (51) that is disposed on said frontal frame body (111), and that has a main body portion (511) connected to said frontal frame body (111), and a hook portion (512) protruding upwardly from a side of said main body portion (511) distal to said frontal frame body;
said second connecting set (6) has a transverse rod (62) that extends in the left-right direction (D1) and that engages said retaining hook (51) such that it abuts against said main body portion (511) and said hook portion (512) of said retaining hook (51).

7. The cargo vehicle as claimed in claim 6, wherein:
said second connecting set (6) further has a fixed seat (61) fixed to said front panel (23), a transmission shaft (63) mounted to said fixed seat (61), a transmission assembly (64) that couples said transmission shaft (63) with said transverse rod (62), and a handle (65) that is rotatable, and that is connected to one end of said transmission assembly (64),
said fixed seat (61) of said second connecting set (6) has a slide slot (611) that extends along a slide direction (D4) transverse to the left-right direction (D1), and that is penetrated by said transverse rod (62);
said handle (65) is operable to rotate said transmission shaft (63) which in turn drives said transverse rod (62) via said transmission assembly (64) to move in the slide slot (611) between a lifted position and an unlifted position;
when said transverse rod (62) is in the lifted position, said transverse rod (62) is distal to a bottom end (612) of said slide slot (611) of said fixed seat (61); and
when said transverse rod (62) is in the unlifted position, said transverse rod (62) is at said bottom end (612) of said slide slot (611) of said fixed seat (61).

8. The cargo vehicle as claimed in any one of claims 6 and 7, wherein:
said retaining hook (51) of said first connecting set (5) further has a guide surface (513) that extends inclinedly, upwardly, and forwardly toward said frontal frame body from an end of said hook portion (512) distal to said frontal frame body (111); and said transverse rod (62) is slided along said guide surface (513) and is guided to move upwardly and forwardly until falling downward to contact the main body portion (511) of said retaining hook (51) as said cargo case (2) is moved into said accommodation space (113).

9. The cargo vehicle as claimed in claim any one of claims 7 and 8 wherein:
said transmission assembly (64) has a transmission member (641) that is rotatable, and that is connected to said transmission shaft (63), and a linkage (642) that has two opposite ends, one of said ends of said linkage (642) being pivotally connected to said transmission member (641), another one of said ends of said linkage (642) being pivotally connected to said transverse rod (62); and
when said transmission shaft (63) is rotated, said transmission member (641) is driven to rotate which drives movement of said linkage (642), and said transverse rod (62) is driven by movement of said linkage (642) to move in said slide slot (611) between the lifted position and the unlifted position.

10. The cargo vehicle as claimed in and one of claims 7 to 9, wherein:
said second connecting set (6) further has a restoring member (66) located below said transverse rod (62) and interconnecting said transverse rod (62) with said front panel (23); and
when said transverse rod (62) is in the lifted position, said restoring member (66) generates a returning force to return said transverse rod (62) towards said bottom end (612) of said slide slot (611).
